# EUROPEAN PATENT APPLICATION

(11) **EP 3 879 088 A1**
(43) Date of publication of application: **15.09.2021**
(21) Application number: 19881268.7
(22) Date of filing: 06.11.2019
(51) Int. Cl.: F02C 7/143, F01D 25/00, F01K 23/10, F02C 7/00, F02C 7/057, F02C 9/18

(54) **GAS TURBINE SYSTEM**

(30) Priority: 07.11.2018 JP 2018209648
(71) Applicant: Kawasaki Jukogyo Kabushiki Kaisha, Hyogo 650-8670 (JP)
(72) Inventor: TANIMURA, Kazuhiko, Kobe-shi, Hyogo 650-8670 (JP); YAMASAKI, Yoshihiro, Kobe-shi, Hyogo 650-8670 (JP); KINUGAWA, Masayoshi, Kobe-shi, Hyogo 650-8670 (JP); NAKAYAMA, Kentaro, Kobe-shi, Hyogo 650-8670 (JP)
(74) Representative: dompatent von Kreisler Selting Werner - Partnerschaft von Patent- und Rechtsanwälten mbB
(86) International application number: PCT/JP2019/043535
(87) International publication number: WO 2020/095955

(57) **Abstract**

Provided is a gas turbine system (S) including: a gas turbine engine unit (GT) including a compressor (1) configured to compress air, a combustor (3) configured to mix fuel into the air compressed by the compressor (1) to combust the fuel and the air, and a turbine (5) configured to be driven by combustion gas generated by the combustor (3); a spraying nozzle (31) disposed in an intake passage (7) of the compressor (1) and configured to spray water into the air to be taken into the compressor (1); and a compressed-air supply system (33) configured to supply the spraying nozzle (31) with compressed air (CA) for spraying, the compressed-air supply system having an extraction port (37) configured to extract air from a stage located upstream with respect to an outlet of the compressor (1).

## Description

### CROSS REFERENCE TO THE RELATED APPLICATION

This application is based on and claims Convention priority to Japanese patent application No. 2018-209648, filed November 7, 2018, the entire disclosure of which is herein incorporated by reference as a part of this application.

### BACKGROUND OF THE INVENTION

### (Field of the Invention)

The present invention relates to a system including a gas turbine engine and, in particular, to a system including a spraying nozzle for cooling intake air of a gas turbine engine.

### (Description of Related Art)

Recently, it has become increasingly necessary to actively use renewable energy such as wind power and sunlight. Along with that, liberalization of the power supply industry has progressed as is apparent from e.g. planned separation of power generation and power transmission in power supply industry in the near future. With the progress in use of renewable energy and liberalization of the power supply industry, it is expected that there will be an increasing demand for power generation systems capable of changing a power generation amount depending on a demand situation. As a technology for changing a power generation output in a gas turbine engine expected to serve as a driving source of such a power generation system, it is known to spray atomized water into air to be taken into the engine to cool it so as to improve the power generation output (see, for example, Patent Document 1).

Known technologies for atomizing water include a technique of applying high pressure to water to spray it through fine holes of a nozzle and a technique of injecting water together with compressed air to spray it. The former technique is not an economical way of spraying a large amount of water because it requires a large number of nozzles due to a smaller amount of spray per nozzle. For this reason, the gas-turbine intake-air cooling device of Patent Document 1 employs the technique of spraying water with compressed air. Specifically, the gas-turbine intake-air cooling device uses compressed air extracted from an outlet of a compressor to spray water.

### [Related Document]

### [Patent Document]

[Patent Document 1] JP Laid-open Patent Publication No. 2011-085102 SUMMARY OF THE INVENTION

In the case where high-pressure compressed air is extracted from a compressor and is used in spraying, however, the extraction of the compressed air increases an output loss and exacerbates reduction in efficiency of the gas turbine engine.

An object of the present invention is to provide a gas turbine system capable of highly efficiently and inexpensively providing an improved power generation output as a whole system in order to solve the above problem.

To achieve the object, a gas turbine system according to the present invention includes:
a gas turbine engine unit including a compressor configured to compress air, a combustor configured to mix fuel into the air compressed by the compressor to combust a mixture of the fuel and the air, and a turbine configured to be driven by combustion gas generated by the combustor;
a spraying nozzle disposed in an intake passage of the compressor and configured to spray water into the air to be taken into the compressor; and
a compressed-air supply system configured to supply the spraying nozzle with compressed air for spraying, the compressed-air supply system having an extraction port configured to extract air from a stage located upstream with respect to an outlet of the compressor.

According to the constitution, use of such a two-fluid nozzle as the spraying nozzle for cooling the intake air, which is configured to inject water together with compressed air and can spray a large amount of water per nozzle, makes it possible to ensure a sufficient amount of spray even where a small number of such nozzles are provided. Further, since the compressed air to be used in spraying is extracted not from a high-pressure part in an outlet portion of the compressor, but from a relatively low-pressure part in a stage upstream of the high-pressure part, it is possible to suppress the output loss and the reduction in the efficiency due to the extraction of the compressed air. Therefore, this makes it possible to highly efficiently and inexpensively provide an improved power generation output as a whole system.

In the gas turbine system according to an embodiment of the present invention, the gas turbine system may further include: a variable stator vane adjusting mechanism capable of adjusting an attachment angle of a stator vane of the compressor; and a variable stator vane control device configured to control the variable stator vane adjusting mechanism in accordance with an extraction amount through the extraction port. According to the constitution, the variable stator vane can be controlled to adjust the amount of the air to be taken into the compressor in accordance with the extraction amount from the compressor, so that it is possible to further suppress the output loss and the reduction in the efficiency due to the extraction of the compressed air.

In the gas turbine system according to an embodiment of the present invention, the gas turbine system may further include: a Rankine cycle engine including an exhaust heat boiler configured to use exhaust gas from the turbine as a heating medium to generate steam; and a spray-water supply system configured to supply the spraying nozzle with water obtained by condensation of the steam generated by the exhaust heat boiler as spray water. The water heated by the boiler contains extremely small amounts of impurities such as minerals, so that it provides the effect of preventing corrosion close to that of pure water in a practical sense. Therefore, this constitution makes it possible to effectively suppress corrosion of constituting members of the gas turbine due to the spray water at low cost.

In the gas turbine system according to an embodiment of the present invention, at least one of rotor blades and stator vanes of the compressor may be made of a metal material containing titanium. This constitution makes it possible to more effectively suppress corrosion of the rotor blades and the stator vanes of the compressor due to water.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views. In the figures,
Fig. 1 is a block diagram illustrating a schematic constitution of a gas turbine system according to an embodiment of the present invention;
Fig. 2 is a partially cutaway side view of a gas turbine engine unit of the gas turbine system of Fig. 1;
Fig. 3 is a longitudinal section view illustrating a peripheral part of a compressor of the gas turbine system of Fig. 1;
Fig. 4 is a circumferential section view illustrating a blade arrangement of stator vanes and rotor blades of the compressor of the gas turbine system of Fig. 1;
Fig. 5 is a sectional view along line V-V of Fig. 3; and
Fig. 6 is a graph schematically illustrating a control aspect of a variable stator vane in the gas turbine system of Fig. 1.

### DESCRIPTION OF THE EMBODIMENTS

Hereinafter, embodiments according to the present invention will be described with reference to the drawings.

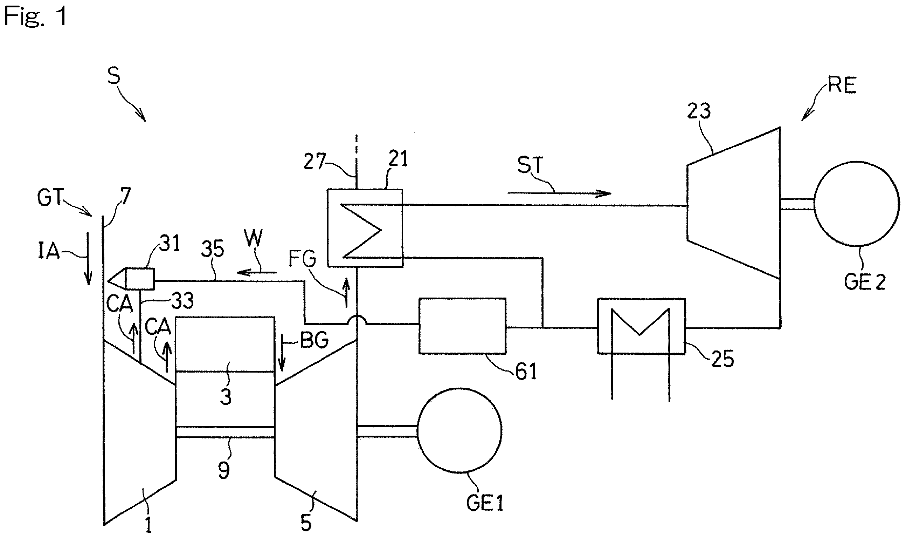

Fig. 1 shows a schematic constitution of a gas turbine system S according to an embodiment of the present invention. The gas turbine system S includes a gas turbine engine unit (hereinafter, simply referred to as "gas turbine") GT including a compressor 1, a combustor 3, and a turbine 5 and is configured to drive a first power generator GE1, which is a load.

A gas turbine GT is configured to compress air IA introduced from outside through an intake passage 7 by using the compressor 1 to guide it as compressed air CA to the combustor 3, to inject fuel F into the combustor 3 to combust the fuel F together with the compressed air CA, and to drive the turbine 5 by thus-obtained combustion gas BG having high temperature and high pressure. Rotation of the turbine 5 drives the first power generator GE1 coupled to a rotation shaft 9 of the gas turbine GT.

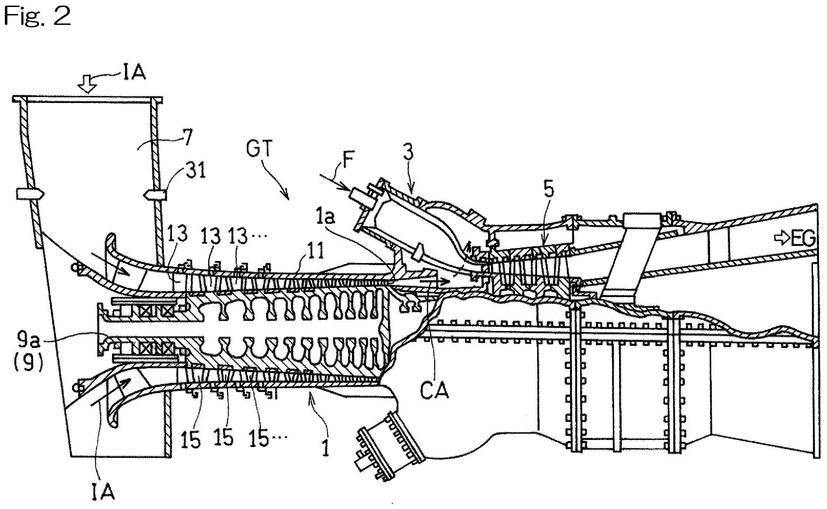

As shown in Fig. 2, the compressor 1 is of an axial flow type in this embodiment. The compressor 1 includes a compressor rotor 9a constituting a part of the rotation shaft 9 of the gas turbine GT and a compressor casing 11. The compressor casing 11 has an inner peripheral part provided with plural stages of compressor stator vanes (hereinafter, simply referred to as "stator vanes") 13 at predetermined intervals. On the other hand, the compressor rotor 9a has an outer peripheral part provided with plural stages of compressor rotor blades (hereinafter, simply referred to as "rotor blades") 15 located downstream of the respective stages of the stator vanes 13. Thanks to the combination of the stator vanes 13 and the rotor blades 15, the air IA taken in through the intake passage 7 is compressed.

As shown in Fig. 1, the gas turbine system S according to the present embodiment is constituted as a cogeneration system including a Rankine cycle engine RE which is driven by use of heat of exhaust gas EG from the gas turbine GT. In the illustrated example, the Rankine cycle engine RE includes an exhaust heat boiler 21, a steam turbine 23, and a condenser 25 as major components. The exhaust heat boiler 21 is disposed in an exhaust duct defining an exhaust passage 27 for discharging the exhaust gas EG from the turbine 5 to the outside. The exhaust gas EG discharged from the turbine 5 passes through the exhaust heat boiler 21 as a heating medium and is then exhausted outside from the exhaust passage 27.

In the Rankine cycle engine RE, water supplied through a water supply pump (not illustrated) is heated in the exhaust heat boiler 21 to generate steam ST, and the steam ST drives the steam turbine 23. Rotation of the steam turbine 23 drives a second power generator GE2 coupled to a rotation shaft of the steam gas turbine GT. The steam ST discharged from the steam turbine 23 is condensed back to water by the condenser 25.

Note that the specific constitution of the Rankine cycle engine RE is not limited to that of the above-described example, and there may suitably be various additional devices such as a heat exchanger for e.g. improving its efficiency in a constitution combined with the gas turbine GT or in a constitution of Rankine cycle engine RE per se. Also, the gas turbine system S may not be necessarily constituted as a cogeneration system.

The gas turbine system S includes a spraying nozzle 31. The spraying nozzle 31 is disposed in the intake passage 7 of the compressor 1 and is configured to spray water into the air IA to be taken into the compressor 1. The spraying nozzle 31 is constituted as a two-fluid nozzle configured to inject spray water W together with the compressed air CA to atomize the water. Therefore, the gas turbine system S further includes a compressed-air supply system 33 configured to supply the spraying nozzle 31 with the compressed air CA for spraying and a spray-water supply system 35 configured to supply the spraying nozzle 31 with the spray water W.

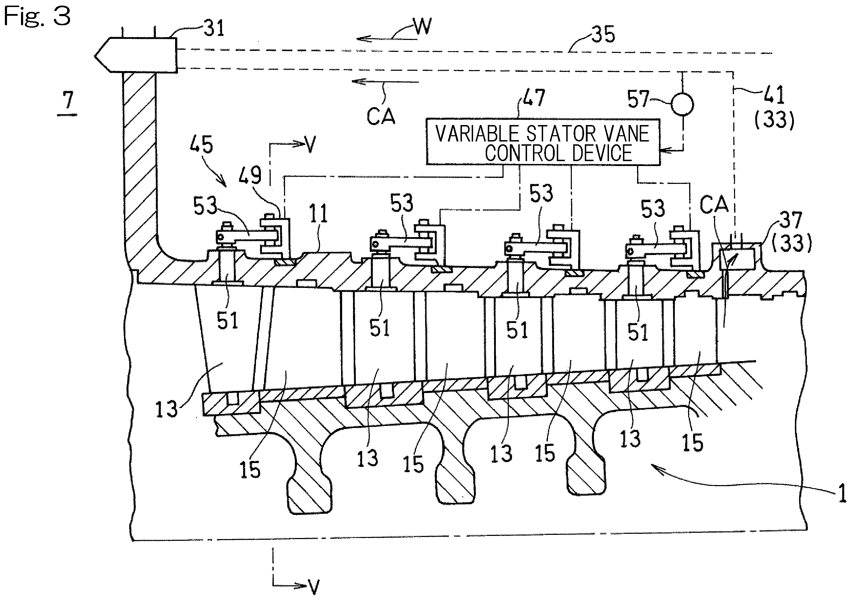

As shown in Fig. 3, the compressed-air supply system 33 has an extraction port 37. The extraction port 37 extracts air from a stage located upstream of a compressor outlet 1a (Fig. 2) of the compressor 1. In other words, the compressed-air supply system 33 supplies the spraying nozzle 31 with the compressed air CA from a stage having lower pressure than that at the compressor outlet 1a. In the present specification, the expression "extacts air from a stage" means that the air is extracted from a space directly downstream of the rotor blade 15 of that stage in the compressor 1. In this example, the compressor 1 is constituted by 11 stages in total, and the extraction port 37 is located (downstream of the rotor blade 15 of the fourth stage) such that the air is extracted from the fourth stage. The extraction port 37 is provided to an outer peripheral part of the compressor casing 11. The compressed air CA extracted through the extraction port 37 is supplied to the spraying nozzle 31 through a compressed-air supply pipe defining a compressed-air supply passage 41 communicating the extraction port 37 with the spraying nozzle 31. The compressed-air supply system 33 is constituted by the extraction port 37 and the compressed-air supply passage 41.

The spraying nozzle 31 used in the present embodiment can atomize a sufficient amount of water by using the compressed air CA from the stage having lower pressure than that at the compressor outlet 1a. Specifically, the spraying nozzle 31 has, for example, an air-to-water ratio (a necessary air flow rate per unit flow rate of the spray water) of about 0.2 and can thus spray water at supplying pressure of about 6 to 7 MPa, which is required of a conventional gas turbine, by air pressure of about 0.3 to 0.4 MPa.

The gas turbine GT according to the present embodiment includes a variable stator vane adjusting mechanism 45 capable of adjusting an attachment angle of a stator vane 13 of the compressor 1 and a variable stator vane control device 47 configured to control the variable stator vane adjusting mechanism 45 according to an extraction amount through the extraction port 37.

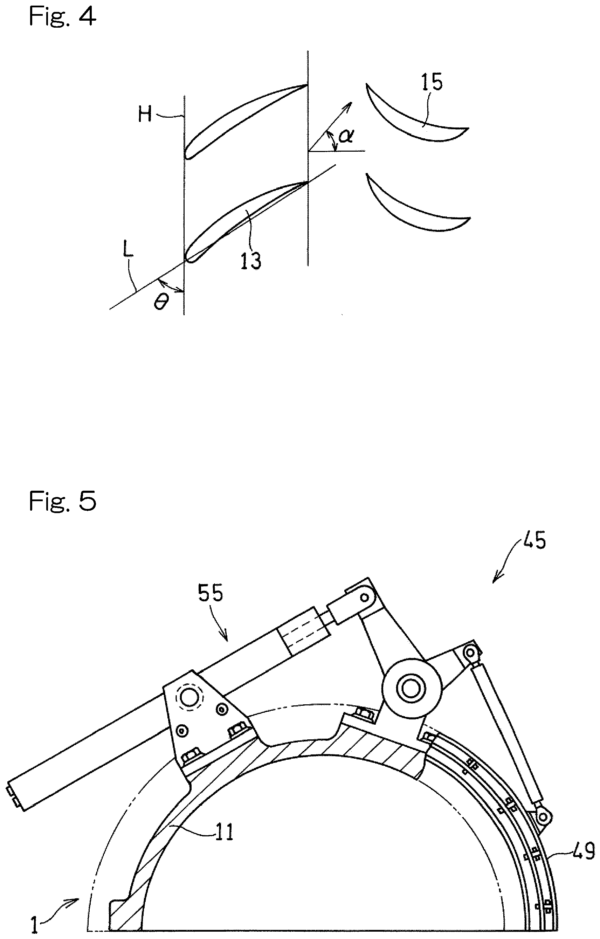

The amount of air to be taken into the compressor 1 can be adjusted by adjusting the attachment angle of the stator vane 13 by the variable stator vane adjusting mechanism 45. Specifically, the variable stator vane adjusting mechanism 45 is configured to adjust the attachment angle θ of the stator vane 13 in a circumferential cross section of the compressor 1 so as to change an exit angle α from the stator vane 13, as shown in Fig. 4. By adjusting the attachment angle θ of the stator vane 13, the amount of the air flowing into the compressor 1 is adjusted. In this regard, the attachment angle θ refers to an angle defined by a circumferential line H and a blade cord L (a line connecting a front edge and a rear edge) of the stator vane 13. Where adjustment is performed so as to increase the attachment angle θ, i.e., decrease the exit angle a, an axial flow rate of the air is increased, and the amount of the air flowing into the compressor 1 is increased. In the present embodiment, as shown in Fig. 3, the variable stator vane adjusting mechanism 45 is provided so as to adjust the attachment angle θ of the stator vanes 13 of four stages including the first stage (the most upstream stage) to the fourth stage of the compressor 1.

The following describes an example of a specific constitution of the variable stator vane adjusting mechanism 45. As shown in Fig. 5, the compressor casing 11 is provided with annular rotary rings 49 on the outer peripheral part thereof. Each rotary ring 49 is located near an arrangement position of the stator vane 13 of a corresponding stage as shown in Fig. 3 and is disposed so as to be rotatable along a circumferential direction of the compressor casing 11. Each rotary ring 49 and a blade shaft 51 of the corresponding stator vane 13 are connected to each other by a coupling arm 53. As shown in Fig. 5, each rotary ring 49 is rotationally driven by, for example, a driving mechanism 55 including an electric actuator. It should be noted that the driving mechanism 55 is omitted in Fig. 3. As the rotary rings 49 are rotationally driven, the blade shafts 51 are rotated through the coupling arms 53, and the stator vanes 13 are rotated about the blade shafts 51, so that the attachment angle is adjusted. Note that the specific constitution of the variable stator vane adjusting mechanism 45 is not limited to this example.

As shown in Fig. 3, the compressed-air supply system 33 (compressed-air supply passage 41 in the illustrated example) is provided with a flow rate measurement device 57 for monitoring the extraction amount of the compressed air CA from the compressor 1. The variable stator vane control device 47 is configured to control the attachment angle of the stator vanes 13 of the variable stator vane adjusting mechanism 45 in accordance with a measured value of the extraction amount which is received from the flow rate measurement device 57 and to thereby adjust the amount of the air flowing into the compressor 1.

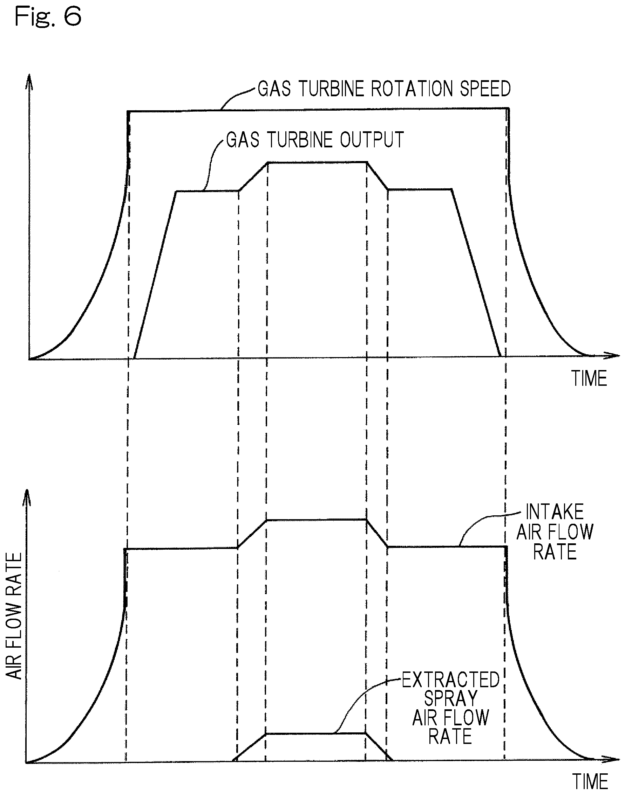

Specifically, the variable stator vane control device 47 is configured to control the variable stator vane adjusting mechanism 45 such that the attachment angle θ of the stator vanes 13 is increased by a predetermined value when extraction of the compressed air CA for spraying from the compressor 1 is started and to control the variable stator vane adjusting mechanism 45 such that the attachment angle θ of the stator vanes 13 is decreased by a predetermined value when the extraction of the compressed air CA from the compressor 1 is stopped. By such a control performed by the variable stator vane control device 47, the amount of the air flowing into the compressor is adjusted in accordance with the extraction amount, as shown in Fig. 6. That is, the amount of the air flowing into the compressor 1 is increased in accordance with the extraction amount while the air for spraying is extracted from the compressor 1. Use of the variable stator vane adjusting mechanism 45 as shown in Fig. 3 to perform such a control makes it possible to suppress the output loss and reduction in the efficiency due to the air extraction from the compressor 1 very effectively.

As long as the extraction port 37 of the compressed-air supply system 33 is provided in a stage upstream of the compressor outlet 1a, the location is not limited to that of the illustrated example, and it may be disposed so as to extract the air from any stage. It is, however, preferable that the air is extracted from a stage located an intermediate part of the compressor 1 in order to ensure pressure for spraying water throug the spraying nozzle 31 and to suppress the reduction in the efficiency of the gas turbine GT due to the air extraction. Specifically, where the compressor 1 include N stages, the air is preferably extracted from the n-th stage satisfying N/4 ≤ n ≤ 3N/4 (n is a natural number).

Further, where the gas turbine system S is provided with the above-described variable stator vane adjusting mechanism 45, the extraction port 37 of the compressed-air supply system 33 is preferably provided in the most downstream stage of the stages controlled by the variable stator vane adjusting mechanism 45. This constitution makes it possible to efficiently compensate the air flowing out through the extraction port 37 by the control of the variable stator vane adjusting mechanism 45.

As shown in Fig. 1, the spray-water supply system 35 in the present embodiment supplies the spraying nozzle 31 with the water obtained by condensation of the steam ST generated by the exhaust heat boiler 21 of the Rankine cycle engine RE, as the spray water W. More specifically, a spray-water reservoir tank 61 for reserving the water condensed by the condenser 25 as the spray water W is provided downstream of the condenser 25. A part of the water obtained by condensation by the condenser 25 is returned to the exhaust heat boiler 21, and another part is reserved in the spray-water reservoir tank 61. The spray-water supply system 35 supplies the spraying nozzle 31 with the water in the spray-water reservoir tank 61 by the water supply pump (not illustrated).

The spray-water supply system 35 may be configured to, for example, supply the spraying nozzle 31 with pure water from a pure water source provided independent from the Rankine cycle engine RE. Use of pure water as the spray water W prevents corrosion of constituting members of the gas turbine GT. In the present embodiment, however, the water obtained by condensation of the steam ST generated by the exhaust heat boiler 21 is used as the spray water W because pure water is expensive. The water heated by the exhaust heat boiler 21 contains extremely small amounts of impurities such as minerals, so that it provides the effect of preventing corrosion close to that of pure water in a practical sense while achieving low cost.

In the present embodiment, at least one of the rotor blades 15 and the stator vanes 13 of the compressor 1 is made of a metal material containing titanium. In this example, the compressor rotor blades 15 are made of a metal material containing titanium. This constitution makes it possible to effectively suppress corrosion of the rotor blades 15 and/or the stator vanes 13 of the compressor 1 due to the spray water. In particular, as described above, where the water condensed in the Rankine cycle engine RE, instead of pure water, is used as the spray water W, it is preferable to employ rotor blades or stator vanes made of a material containing titanium.

According to the gas turbine system S according to the present embodiment, a two-fluid nozzle, which is configured to inject the spray water W together with the compressed air CA and can spray a large amount of water per nozzle, is employed as the spraying nozzle 31 for cooling the air IA to be taken in, so that it is possible to ensure a sufficient amount of spray even where a small number of such nozzles are provided. Further, since the compressed air CA used in spraying is extracted not from a high-pressure part in an outlet portion of the compressor 1, but from a relatively low-pressure part in a stage upstream of the high-pressure part, it is possible to suppress the output loss and the reduction in the efficiency due to the extraction of the compressed air CA. Therefore, it is possible to highly efficiently and inexpensively provide an improved power generation output as a whole system.

Although the preferred embodiments of the present invention have been described with reference to the drawings, various additions, modifications, or deletions may be made without departing from the scope of the invention. Accordingly, such variants are included within the scope of the present invention.

### [Reference Numerals]

- 1 ····: compressor
- 1a ····: compressor outlet
- 3 ····: combustor
- 5 ····: turbine
- 7 ····: intake passage
- 13 ····: stator vane of the compressor
- 15 ····: rotor blade of the compressor
- 31 ····: spraying nozzle
- 33 ····: compressed-air supply system
- 35 ····: spray-water supply system
- 37 ····: extraction port
- 45 ····: variable stator vane adjusting mechanism
- 47 ····: variable stator vane control device
- GT ····: gas turbine (gas turbine engine unit)
- RE ····: Rankine cycle engine
- S ····: gas turbine system

## Claims

1. A gas turbine system comprising:
a gas turbine engine unit including a compressor configured to compress air, a combustor configured to mix fuel into the air compressed by the compressor to combust a mixture of the fuel and the air, and a turbine configured to be driven by combustion gas generated by the combustor;
a spraying nozzle disposed in an intake passage of the compressor and configured to spray water into the air to be taken into the compressor; and
a compressed-air supply system configured to supply the spraying nozzle with compressed air for spraying, the compressed-air supply system including an extraction port configured to extract air from a stage located upstream with respect to an outlet of the compressor.

2. The gas turbine system as claimed in claim 1, further comprising:
a variable stator vane adjusting mechanism capable of adjusting an attachment angle of a stator vane of the compressor; and
a variable stator vane control device configured to control the variable stator vane adjusting mechanism in accordance with an extraction amount through the extraction port.

3. The gas turbine system as claimed in claim 1 or 2, further comprising:
a Rankine cycle engine including an exhaust heat boiler configured to generate steam by using exhaust gas from the turbine as a heating medium; and
a spray-water supply system configured to supply the spraying nozzle with water obtained by condensation of the steam generated by the exhaust heat boiler as spray water.

4. The gas turbine system as claimed in any one of claims 1 to 3, wherein at least one of rotor blades and stator vanes of the compressor is made of a metal material containing titanium.
